# EUROPÄISCHE PATENTSCHRIFT

(11) **EP 4 111 279 B1**
(45) Veröffentlichungstag und Bekanntmachung des Hinweises auf die Patenterteilung: **17.06.2026**
(21) Anmeldenummer: 21700430.8
(22) Anmeldetag: 13.01.2021
(51) Int. Cl.: G05B 19/418, G05B 23/02

(54) **DATENREDUZIERTE EDGE-ZU-CLOUD-ÜBERTRAGUNG BASIEREND AUF VORHERSAGEMODELLEN**
DATA-REDUCED EDGE-TO-CLOUD TRANSMISSION BASED ON PREDICTION MODELS
TRANSMISSION DE BORD À NUAGE À RÉDUCTION DE DONNÉES BASÉE SUR DES MODÈLES DE PRÉDICTION

(30) Priorität: 26.02.2020 DE 102020202463
(43) Veröffentlichungstag der Anmeldung: 04.01.2023
(73) Patentinhaber: Wago Verwaltungsgesellschaft mbH, 32423 Minden (DE)
(72) Erfinder: HELLER, Michael, 78112 St. Georgen (DE); GOJ, Raphael, 78112 St. Georgen (DE)
(74) Vertreter: Bardehle Pagenberg Partnerschaft mbB Patentanwälte Rechtsanwälte
(86) Internationale Anmeldenummer: PCT/EP2021/050516
(87) Internationale Veröffentlichungsnummer: WO 2021/170303

(56) Entgegenhaltungen:
- WO-A1-2019/162648
- US-A- 5 386 373
- US-B2- 8 606 544

## Beschreibung

### 1. Technisches Gebiet

Die Erfindung betrifft allgemein das Gebiet der industriellen Automatisierungstechnik und insbesondere Verfahren und Techniken zur datenreduzierten Übertragung zwischen Edge-Geräten und Cloud-Systemen basierend auf Vorhersagemodellen.

### 2. Hintergrund

Im Zuge der vierten industriellen Revolution und der alles durchdringenden Digitalisierung auch und gerade in der industriellen Automatisierungstechnik werden zunehmend Cloud-Lösungen zur Analyse, Verwaltung und ggf. sogar Steuerung der Automatisierungsumgebung und ihrer Komponenten eingesetzt. Innerhalb eines Cloud-Systems werden die empfangenen Daten üblicherweise gespeichert, ausgewertet und den Benutzern für beliebige Endgeräte aufbereitet zur Verfügung gestellt. Auch ist es möglich, dass aus dem Cloud-System Daten (z.B. Befehle, Firmware-Updates) an die Komponenten bzw. Geräte einer Automatisierungsumgebung gesendet werden. Die Verbindung der Geräte mit dem bzw. den Cloud-System(en) kann hierbei kabelgebunden oder kabellos (z.B. über Mobilfunktechnologien) ausgebildet sein.

Die Geräte innerhalb der Automatisierungsumgebung werden in diesem Zusammenhang oft auch als Edge-Geräte bezeichnet. Unter einem Edge-Gerät sei allgemein ein Gerät verstanden, welches zwar an ein entferntes Computersystem, insbesondere ein Cloud-System, angebunden ist, trotzdem aber eine lokale und daher dezentrale Datenverarbeitung vornimmt, beispielsweise um Daten vor der Übertragung in die Cloud bzw. an das entfernte Computersystem aufzubereiten.

Jedoch ist das Senden von Daten von Geräten an Cloud-Systeme und die hierfür benötigte Datenverbindung mit negativen Eigenschaften behaftet. Beispielsweise ist die Datenübertragung im industriellen Kontext oft mit nutzungsabhängigen Kosten verbunden, d.h. je mehr Daten übertragen werden sollen, desto teurer kann dies werden. Die Kosten resultieren z.B. aus dem entstehenden Traffic und/oder der Anzahl der eingehenden Nachrichten in das Cloud-System.

Des Weiteren ist die Datenübertragungsrate physikalisch oft limitiert, was bedeutet, dass nicht beliebig viele Daten übertragen werden können. Je mehr Geräte sich eine Verbindung teilen, je geringer ist die mögliche Datenübertragungsrate.

Vor allem im Kontext des Internets, aber auch in einem Intranet, kann eine Datenverbindung ferner auch durch Ausfälle beeinträchtigt sein.

Eine Möglichkeit zur Überwindung dieser Nachteile offenbart beispielsweise das Dokument "Deep Learning: Edge-Cloud Data Analytics for IoT" von A. Ghosh et al. (Department of Electrical and Computer Engineering, Western University, London, ON, Canada, May 2019). Das Dokument offenbart ein Verfahren, bei dem Sensordaten von einem Edge-Gerät empfangen werden, diese innerhalb des Edge-Geräts reduziert werden und anschließend an die Cloud übertragen werden. Dort werden die reduzierten Daten wieder in die ursprünglichen Daten rücküberführt.

Das Dokument WO 2019/162648 A1 offenbart ein Diagnosetool, das eine Steuerung eines geschlossenen Regelkreises überwacht. Hierbei arbeitet das Diagnosetool unabhängig von der Steuerung und dem zu steuernden System. Das Diagnosetool prüft, ob die tatsächlichen Steuersignale mit erwarteten, simulierten Steuerdaten übereinstimmen.

Das Dokument US 5,386,373 A beschreibt ein System zur virtuellen kontinuierlichen Überwachung von Emissionen einer Anlage. Hierbei werden Steuerungswerte und Sensorwerte an ein virtuelles Sensor-Vorhersagenetzwerk bereitgestellt, das dazu verwendet wird, einen Abgaslevel vorherzusagen.

Das Dokument US 8,606,544 B2 beschreibt Verfahren und Systeme, die es erleichtern, einen nicht-normalen Betrieb in einer Anlage zu detektieren. Hierbei werden Werte einer Prozessvariablen analysiert, um festzustellen, ob diese signifikant von erwarteten Werten abweichen. Wenn eine signifikante Abweichung vorliegt, wird ein Indikator erzeugt. Die erwarteten Werte werden aus mindestens einer anderen Prozessvariablen mittels eines Modells erzeugt.

Der vorliegenden Erfindung liegt das Problem zugrunde, Techniken zum Übertragen von Daten aus einer industriellen Automatisierungsumgebung an ein Computersystem bereitzustellen, die die negativen Auswirkungen der oben beschriebenen Eigenschaften des Standes der Technik zumindest teilweise überwinden.

### 3. Zusammenfassung der Erfindung

Dieses Problem wird durch die Gegenstände der unabhängigen Patentansprüche gelöst, wobei die Unteransprüche bevorzugte Weiterbildungen betreffen.

So betrifft Anspruch 1 ein Verfahren zum Bereitstellen von Prozessdaten eines Geräts in einer industriellen Automatisierungsumgebung an ein Computersystem. Ein Prozessdatenmodell wird auf dem Gerät ausgeführt, um jeweilige geschätzte Prozessdaten zu erzeugen. Das Prozessdatenmodell wird auch auf dem Computersystem ausgeführt, sodass dort ebenfalls geschätzte Prozessdaten erzeugt und anstelle von realen Prozessdaten genutzt werden. Ferner wird auf dem Gerät bestimmt, ob die geschätzten Prozessdaten um mehr als einen Schwellwert von realen Prozessdaten abweichen. Nur dann, wenn die geschätzten Prozessdaten um mehr als den Schwellwert von den realen Prozessdaten abweichen, werden Informationen, welche die realen Prozessdaten repräsentieren, von dem Gerät zu dem Computersystem übertragen und ansonsten erfolgt keine Informationsübertragung vom Gerät an das Computersystem.

Wie eingangs mit Bezug auf den Stand der Technik beschrieben wurde, würde ein Computersystem üblicherweise reale Prozessdaten, welche es von dem Gerät in der Automatisierungsumgebung erhalten hat, nutzen. Die Erfindung weicht hiervon dahingehend ab, dass das Computersystem nunmehr anstelle von realen Prozessdaten zunächst geschätzte Prozessdaten nutzt, welche von einem Prozessdatenmodell erzeugt wurden. Anders gesagt arbeitet das Computersystem gewissermaßen auf einer Simulation der realen Prozessdaten.

Um zu verhindern, dass das Prozessdatenmodell inakkurate geschätzte Prozessdaten liefert, sieht die Erfindung ferner vor, das Prozessdatenmodell auch auf dem Gerät auszuführen, damit die geschätzten mit den realen Prozessdaten verglichen werden können. Bei einer zu großen Abweichung (wobei der oben genannte Schwellwert auch Null sein kann, d.h. dann bei irgendeiner noch so kleinen Abweichung) werden Informationen vom Gerät an das Computersystem übertragen, welche die realen Prozessdaten repräsentieren. Erfindungsgemäß, werden diese Informationen nur bei Auftreten der Abweichung übertragen, d.h. im Normalbetrieb (während das Computersystem auf Basis des Prozessdatenmodells arbeitet) erfolgt keine Informationsübertragung vom Gerät an das Computersystem.

Dies ist aus mehrerlei Hinsicht technisch vorteilhaft:
- Je besser das Prozessdatenmodell ist, desto weniger Informationen müssen vom Gerät an das Computersystem übertragen werden bzw. je seltener müssen diese übertragen werden. Dadurch ergeben sich signifikante Einsparungen beim Datenaustausch. Durch eine geringere Datenübertragung entstehen geringere Kosten für Traffic und eingehende Nachrichten in das Computersystem.
- Die Übertragungszeit der Daten vom Gerät zum Computersystem entfällt größtenteils, woraus sich kürzere Reaktionszeiten ergeben können.
- Dadurch, dass die Daten nicht mehr kontinuierlich gesendet werden müssen, sind die Folgen eines Datenklaus unter Umständen geringer, da der Abhörende nur noch Teile der Daten abgreifen kann.
- Für den Fall einer Unterbrechung der Datenübertragung ist diese nur relevant, wenn die realen Prozessdaten von den geschätzten Prozessdaten abweichen. Der Abgleich muss dann zu einem späteren Zeitpunkt, wenn die Datenübertragung wieder funktioniert, erfolgen.

In einem Aspekt der Erfindung können die Informationen, welche die realen Prozessdaten repräsentieren, die realen Prozessdaten umfassen. Anders gesagt können im Falle einer Abweichung zwischen dem Prozessdatenmodell und den realen Prozessdaten die realen Prozessdaten selbst an das Computersystem gesendet werden.

Alternativ können die Informationen, welche die realen Prozessdaten repräsentieren, auch Rekonstruktionsdaten umfassen, wobei die Rekonstruktionsdaten es dem Computersystem erlauben, die realen Prozessdaten aus den geschätzten Prozessdaten zu rekonstruieren. Beispielsweise können die Rekonstruktionsdaten Differenzwerte umfassen.

Ein weiterer Aspekt der vorliegenden Erfindung, der in Kombination mit den obigen Aspekten, aber auch für sich genommen vorteilhaft ist, betrifft das Erzeugen des Prozessdatenmodells durch ein maschinelles Lernsystem auf Basis von realen Prozessdaten. Das maschinelle Lernsystem ist vorzugsweise in dem Computersystem oder einem zweiten Computersystem angeordnet. Das Prozessdatenmodell kann sodann auf das Gerät und, falls das Prozessdatenmodell auf dem zweiten Computersystem erzeugt wurde, auf das Computersystem übertragen werden.

Wenn die geschätzten Prozessdaten um mehr als den Schwellwert von den realen Prozessdaten abweichen ist es ferner möglich, das Prozessdatenmodell nachzutrainieren und das Prozessdatenmodell auf dem Gerät und auf dem Computersystem entsprechend zu aktualisieren.

Das Gerät kann ein Edge-Gerät, ein Feldgerät, ein Steuergerät und/oder eine speicherprogrammierbare Steuerung (z.B. WAGO PFC-Controller, WAGO Touch-Panel) umfassen. An solch ein Gerät können üblicherweise Sensoren und/oder Aktoren angeschlossen werden, und mit ihm werden die unterschiedlichen Aufgaben im Kontext der Automatisierungstechnik realisiert.

Das Computersystem kann insbesondere ein Cloud-System und/oder einen Server umfassen; ebenso wie das zweite Computersystem. Bevorzugterweise ist das Computersystem und/oder das zweite Computersystem von dem Gerät örtlich entfernt. Beispiele für Cloud-Systeme sind ohne Anspruch auf Vollständigkeit die WAGO-Cloud, Microsoft Azure, Amazon AWS, die SAP-Cloud und/oder die IBM-Cloud.

Die Erfindung stellt ferner ein Computerprogramm mit Anweisungen zum Implementieren irgendeines der obigen Verfahren und ihrer verschiedenen Aspekte bereit, ebenso wie ein Gerät und ein Computersystem zur Verwendung in einem der beschriebenen Verfahren. Schließlich umfasst die Erfindung auch ein System, umfassend ein Gerät und ein Computersystem wie beschrieben, wobei das System konfiguriert ist zum Durchführen irgendeines der obigen Verfahren.

### 4. Kurze Beschreibung der Zeichnungen

Im Folgenden werden bevorzugte Ausführungsbeispiele der vorliegenden Erfindung unter Bezugnahme auf die begleitenden Figuren erläutert:
- Fig. 1a-c:: Eine Ausführungsformen der Erfindung, bei dem das maschinelle Lernsystem in das entfernte Computersystem integriert ist;
- Fig. 2a-c:: Eine Ausführungsform mit externem maschinellem Lernsystem; und
- Fig. 3:: Ein Flussdiagramm eines Verfahrens gemäß einer Ausführungsform der Erfindung.

### 5. Detaillierte Beschreibung bevorzugter Ausführungsformen

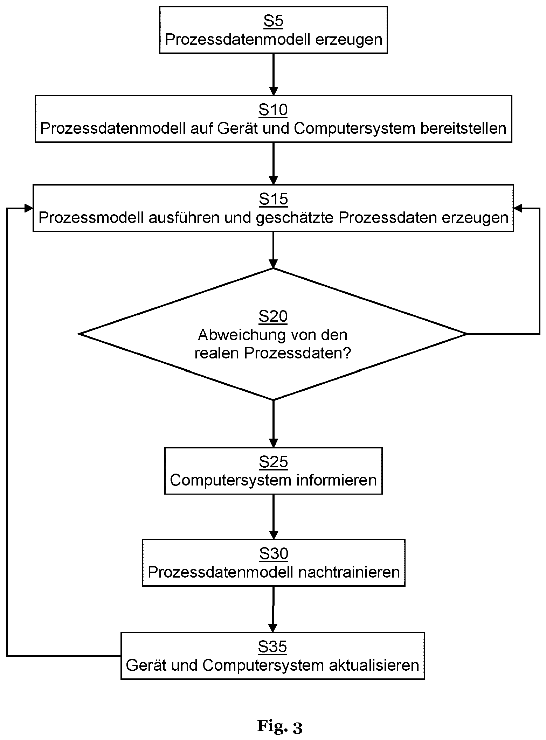

Im Folgenden werden gegenwärtig bevorzugte Ausführungsbeispiele eines erfindungsgemäßen Verfahrens zur reduzierten Datenübertragung zwischen einem Gerät und einem Computersystem mit Bezug auf Fig. 3 genauer erläutert.

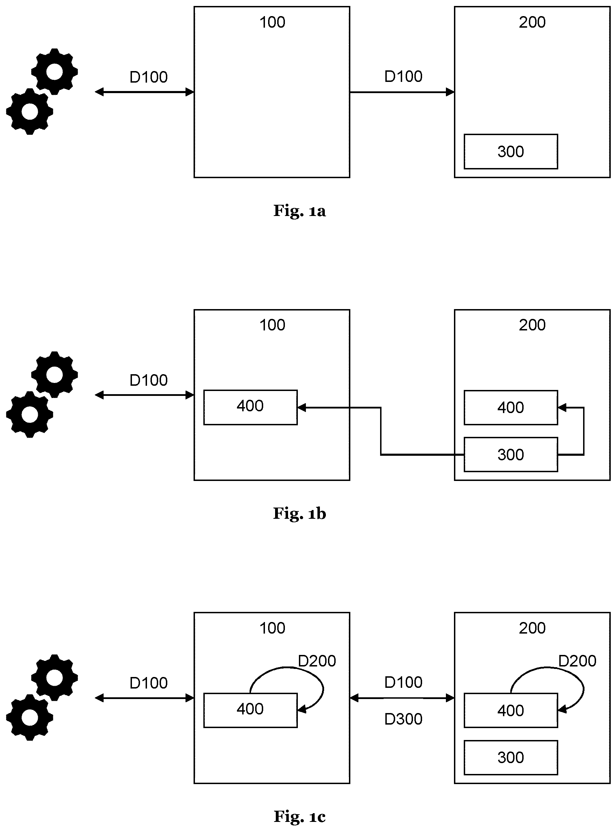

In einer Vorbereitungsphase, welche in Fig. 1a dargestellt ist, werden zunächst reale Prozessdaten D100, die z.B. im Kontext einer automatisierten Anlage entstehen, gesammelt und darauf basierend ein Vorhersagemodell 400 (auch Prozessdatenmodell genannt) erzeugt (vgl. Schritt S5 in Fig. 3), welches dann die (zukünftigen) Prozessdaten vorhersagen kann. Bei dem Prozessdatenmodell 400 handelt es sich vorzugsweise um ein (mathematisches bzw. statistisches) Modell zur Simulation realer Prozessdaten. Die Erzeugung des Vorhersagemodells 400 erfolgt vorzugsweise innerhalb eines Cloud-Systems 200 auf Grundlage eines maschinellen Lernsystems 300. Cloud-Systeme eignen sich hierfür besonders gut, da diese die nötigen IT-Ressourcen nach Bedarf zur Verfügung stellen können.

Das maschinelle Lernsystem 300 kann auf unterschiedlichen Algorithmen basieren, welche je nach Problemstellung angewendet werden. In einer bevorzugten Implementierung wird ein strukturell vorab definiertes statistisches Modell anhand von Ein-/Ausgabe-Datenpaaren eingelernt. Dabei durchläuft iterativ ein Teil der Datenpunkte das Modell. Der Lernalgorithmus kann basierend auf der Abweichung der errechneten Ergebnisse zu den erwarten Ergebnissen das Modell schrittweise anpassen. Hierzu können passende Techniken aus dem maschinellen Lernen und der künstlichen Intelligenz zum Einsatz kommen. Ein Ziel bei einem solchen überwachten Lernen ist es, dass dem Netz nach mehreren Rechengängen mit unterschiedlichen Ein- und Ausgaben die Fähigkeit antrainiert wird, Assoziationen herzustellen.

Das Vorhersagemodell 400 wird anschließend in Schritt S10 auf das Edge-Gerät 100 verteilt, was in Fig. 1b dargestellt ist.

Zur Laufzeit (vgl. Fig. 1c) wird das Prozessdatenmodell 400 in Schritt S15 vorzugsweise parallel sowohl innerhalb des Cloud-Systems 200 als auch auf dem Edge-Gerät 100 ausgeführt und es werden Vorhersagedaten D200 für die entsprechenden Prozessdaten erzeugt. Bei den Daten D200 handelt es sich somit um geschätzte Prozessdaten.

Auf dem Edge-Gerät 100 erfolgt ergänzend in Schritt S20 ein (kontinuierlicher) Abgleich zwischen den eigentlichen Prozessdaten D100 des realen Prozesses und den geschätzten Prozessdaten D200, welche das Vorhersagemodell 400 erzeugt.

Wird eine Abweichung zwischen den realen Prozessdaten D100 und den Prozessdaten D200 des Vorhersagemodells 400 auf dem Edge-Gerät 100 festgestellt (wobei hier durch einen Schwellwert eine gewisse Abweichungstoleranz eingestellt werden kann), bedeutet dies, dass die vorhergesagten Prozessdaten D200 innerhalb des Cloud-Systems 200 nicht mehr korrekt sind. Um jederzeit korrekte Prozessdaten innerhalb des Cloud-Systems 200 vorliegen zu haben, müssen in einem solchen Fall (siehe Schritt S25) entweder die realen Prozessdaten D100 in das Cloud-System 200 übertragen werden, oder es müssen sogenannte Rekonstruktionsdaten D300 gesendet werden, welche der Rekonstruktion der Prozessdaten aus dem Vorhersagemodell 400 dienen (z.B. auf Grundlage von Differenzen), damit diese anschließend den realen Prozessdaten D100 entsprechen.

Es versteht sich, dass die in Fig. 1a und 1b illustrierte Vorbereitungsphase (vgl. Schritte S5 und S10 in Fig. 3) funktional unabhängig von der in Fig. 1c dargestellten Laufzeitphase (vgl. Schritte S15 bis S25 in Fig. 3) ist, d.h. das Prozessdatenmodell 400 kann auch aus einer anderen Quelle stammen oder auf andere Art und Weise erzeugt worden sein.

Das Vorhersagemodell 400 kann gegebenenfalls in Schritt S30 auch nachtrainiert und in Schritt S35 auf dem Edge-Gerät 100 sowie dem Cloud-System 200 aktualisiert werden, um dessen Vorhersagegenauigkeit möglichst hoch zu halten, welche aufgrund von Saisonalitäten oder geänderten Umgebungsbedingungen abnehmen können.

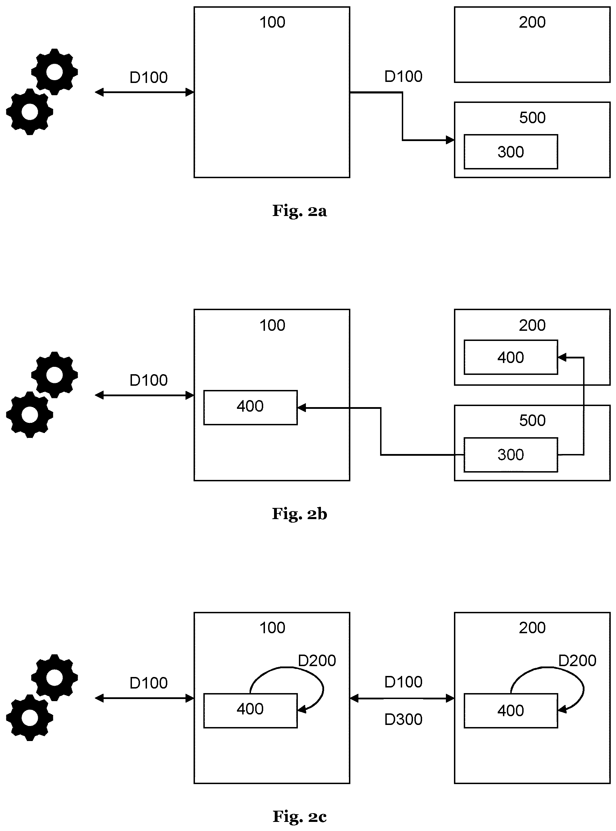

Wie in Fig. 2a-c dargestellt, kann der Betrieb des maschinellen Lernsystems 300 und die Erstellung des Vorhersagemodells 400 auch auf einem separaten (Cloud-)System 500 erfolgen. Das Cloud-System 500 kann sowohl von extern genutzt, als auch intern betrieben werden. Ein Cloud-System 200 bzw. 500 kann unter Umständen auch durch einen herkömmlichen Server repräsentiert werden.

### Liste der Bezugszeichen:

- 100: Gerät bzw. Edge-Gerät
- 200: Computersystem bzw. Cloud-System
- 300: maschinelles Lernsystem
- 400: Prozessdatenmodell bzw. Vorhersagemodell
- 500: zweites Computersystem bzw. separates Cloud-System
- D100: reale Prozessdaten
- D200: geschätzte Prozessdaten
- D300: Rekonstruktionsdaten

## Patentansprüche

1. Ein Verfahren zum datenreduzierten Bereitstellen von Prozessdaten eines Geräts (100) in einer industriellen Automatisierungsumgebung an ein Computersystem (200), wobei das Verfahren die folgenden Schritte umfasst:
Ausführen (S15) eines Prozessdatenmodells (400) auf dem Gerät (100) zum Erzeugen von geschätzten Prozessdaten (D200), wobei das Computersystem (200) ebenfalls das Prozessdatenmodell (400) ausführt, um entsprechende geschätzte Prozessdaten (D200) zu erzeugen und um diese anstelle von realen Prozessdaten (D100) zu nutzen;
Bestimmen (S20), ob die geschätzten Prozessdaten (D200) um mehr als einen Schwellwert von den realen Prozessdaten (D100) abweichen, wobei das Bestimmen (S20) auf dem Gerät (100) durchgeführt wird; und
nur dann, wenn die geschätzten Prozessdaten (D200) um mehr als den Schwellwert von den realen Prozessdaten (D100) abweichen: Übertragen (S25) von Informationen, welche die realen Prozessdaten (D100) repräsentieren, von dem Gerät (100) zu dem Computersystem (200) und ansonsten keine Informationsübertragung vom Gerät (100) an das Computersystem (200) erfolgt.

2. Das Verfahren nach Anspruch 1, wobei die Informationen, welche die realen Prozessdaten (D100) repräsentieren, die realen Prozessdaten (D100) umfassen.

3. Das Verfahren nach Anspruch 1, wobei die Informationen, welche die realen Prozessdaten (D100) repräsentieren, Rekonstruktionsdaten (D300) umfassen, wobei die Rekonstruktionsdaten (D300) es dem Computersystem (200) erlauben, die realen Prozessdaten (D100) aus den geschätzten Prozessdaten (D200) zu rekonstruieren.

4. Das Verfahren nach Anspruch 3, wobei die Rekonstruktionsdaten (D300) Differenzwerte umfassen.

5. Das Verfahren nach einem der vorstehenden Ansprüche, ferner umfassend:
Erzeugen (S5) des Prozessdatenmodells (400) durch ein maschinelles Lernsystem (300) auf Basis von realen Prozessdaten (D100), wobei das maschinelle Lernsystem in dem Computersystem (200) oder einem zweiten Computersystem (500) angeordnet ist.

6. Das Verfahren nach Anspruch 5, ferner umfassend:
Übertragen (S10) des Prozessdatenmodells (400) auf das Gerät (100) und, falls das Prozessdatenmodell (400) auf dem zweiten Computersystem (500) erzeugt wurde, Übertragen des Prozessdatenmodells (400) auf das Computersystem (200).

7. Das Verfahren nach einem der vorstehenden Ansprüche, ferner umfassend:
wenn die geschätzten Prozessdaten (D200) um mehr als den Schwellwert von den realen Prozessdaten (D100) abweichen: Nachtrainieren (S30) des Prozessdatenmodells (400) und Aktualisieren (S35) des Prozessdatenmodells (400) auf dem Gerät (100) und auf dem Computersystem (200).

8. Das Verfahren nach einem der vorstehenden Ansprüche, wobei:
das Gerät (100) ein Edge-Gerät, ein Feldgerät, ein Steuergerät und/oder eine speicherprogrammierbare Steuerung umfasst; und/oder
das Computersystem (200) ein Cloud-System und/oder einen Server umfasst; und/oder
das zweite Computersystem (500) ein Cloud-System und/oder einen Server umfasst; und/oder
das Computersystem (200) und/oder das zweite Computersystem (500) von dem Gerät (100) örtlich entfernt ist bzw. sind.

9. Ein Computerprogramm mit Anweisungen konfiguriert zum Ausführen ein Verfahrens nach einem der vorstehenden Ansprüche 1-8.

10. Ein Gerät (100) konfiguriert zum Ausführen eines Verfahrens nach einem der vorstehenden Ansprüche 1-8.

11. Ein Computersystem (200) zur Verwendung in einem Verfahren nach einem der vorstehenden Ansprüche 1-8.

12. Ein System, umfassend ein Gerät (100) nach Anspruch 10 und ein Computersystem (200) nach Anspruch 11, wobei das System konfiguriert ist zum Durchführen eines Verfahrens nach einem der vorstehenden Ansprüche 1-8.

## Claims

1. A method for data-reduced provision of process data of a device (100) in an industrial automation environment to a computer system (200), the method comprising the steps of:
executing (S15) a process data model (400) on the device (100) to generate estimated process data (D200), wherein the computer system (200) also executes the process data model (400) to generate corresponding estimated process data (D200) and to use it instead of real process data (D100);
determining (S20) whether the estimated process data (D200) deviates from the real process data (D100) by more than a threshold value, wherein the determining (S20) is performed on the device (100); and
only if the estimated process data (D200) deviates from the real process data (D100) by more than the threshold value: transmitting (S25) information representing the real process data (D100) from the device (100) to the computer system (200) and otherwise no information transmission from the device (100) to the computer system (200).

2. The method of claim 1, wherein the information representing the real process data (D100) comprises the real process data (D100).

3. The method of claim 1, wherein the information representing the real process data (D100) comprises reconstruction data (D300), wherein the reconstruction data (D300) allows the computer system (200) to reconstruct the real process data (D100) from the estimated process data (D200).

4. The method of claim 3, wherein the reconstruction data (D300) comprises difference values.

5. The method of any of the preceding claims, further comprising:
generating (S5) the process data model (400) by a machine learning system (300) based on real process data (D100), wherein the machine learning system is arranged in the computer system (200) or a second computer system (500).

6. The method of claim 5, further comprising:
transmitting (S10) the process data model (400) to the device (100) and, if the process data model (400) has been generated on the second computer system (500), transmitting the process data model (400) to the computer system (200).

7. The method of any of the preceding claims, further comprising:
if the estimated process data (D200) deviates from the real process data (D100) by more than the threshold value: retraining (S30) the process data model (400) and updating (S35) the process data model (400) on the device (100) and on the computer system (200).

8. The method of any of the preceding claims, wherein:
the device (100) comprises an edge device, a field device, a control device and/or a programmable logic controller; and/or
the computer system (200) comprises a cloud system and/or a server; and/or
the second computer system (500) comprises a cloud system and/or a server; and/or
the computer system (200) and/or the second computer system (500) is/are locally remote from the device (100).

9. A computer program comprising instructions configured to perform a method according to any of the preceding claims 1-8.

10. A device (100) configured to perform a method according to any of the preceding claims 1-8.

11. A computer system (200) for use in a method according to any of the preceding claims 1-8.

12. A system comprising a device (100) according to claim 10 and a computer system (200) according to claim 11, wherein the system is configured to perform a method according to any of the preceding claims 1-8.

## Revendications

1. Un procédé de fourniture de données de processus réduites à partir de données d'un appareil (100) dans un environnement d'automatisation industrielle au niveau d'un système informatique (200), dans lequel le procédé comprend les étapes suivantes :
l'exécution (S15) d'un modèle de données de processus (400) sur l'appareil (100) pour générer des données de processus estimées (D200), dans lequel le système informatique (200) exécute également le modèle de données de processus (400) pour générer des données de processus estimées (D200) correspondantes et les utiliser à la place de données de processus réelles (D100) ;
la détermination (S20) si les données de processus estimées (D200) diffèrent ou non de plus d'une valeur de seuil des données de processus réelles (D100), dans lequel la détermination (S20) est effectuée sur l'appareil (100) ; et
ensuite, seulement lorsque les données de processus estimées (D200) diffèrent de plus de la valeur de seuil des données de processus réelles (D100) : le transfert (S25) d'informations qui représentent les données de processus réelles (D100) de l'appareil (100) au système informatique (200) et, dans le cas contraire, aucun transfert d'informations de l'appareil (100) au système informatique (200) n'a lieu.

2. Le procédé selon la revendication 1, dans lequel les informations qui représentent les données de processus réelles (D100) comprennent les données de processus réelles (D100).

3. Le procédé selon la revendication 1, dans lequel les informations qui représentent les données de processus réelles (D100) comprennent des données de reconstruction (D300), dans lequel les données de reconstruction (D300) permettent au système informatique (200) de reconstruire les données de processus réelles (D100) à partir des données de processus estimées (D200).

4. Le procédé selon la revendication 3, dans lequel les données de reconstruction (D300) comprennent des valeurs différentielles.

5. Le procédé selon l'une des revendications précédentes, comprenant en outre :
la génération (S5) du modèle de données de processus (400) par un système d'apprentissage automatique (300) sur la base de données de processus réelles (D100), dans lequel le système d'apprentissage automatique est disposé dans le système informatique (200) ou un deuxième système informatique (500).

6. Le procédé selon la revendication 5, comprenant en outre :
le transfert (S10) du modèle de données de processus (400) sur l'appareil (100) et, si le modèle de données de processus (400) a été généré sur le deuxième système informatique (500), le transfert du modèle de données de processus (400) sur le système informatique (200).

7. Le procédé selon l'une des revendications précédentes, comprenant en outre :
lorsque les données de processus estimées (D200) diffèrent de plus de la valeur de seuil des données de processus réelles (D100) : le post-entraînement (S30) du modèle de données de processus (400) et la mise à jour (S35) du modèle de données de processus (400) sur l'appareil (100) et sur le système informatique (200).

8. le procédé selon l'une des revendications précédentes, dans lequel :
l'appareil (100) comprend un appareil périphérique, un appareil de terrain, un appareil de commande et/ou une commande à mémoire programmable ; et/ou
le système informatique (200) comprend un système en nuage et/ou un serveur ; et/ou
le deuxième système informatique (500) comprend un système en nuage et/ou un serveur ; et/ou
le système informatique (200) et/ou le deuxième système informatique (500) sont localement éloignés de l'appareil (100) .

9. Un programme informatique avec des instructions configuré pour exécuter un procédé selon l'une des revendications précédentes 1 à 8.

10. Un appareil (100) configuré pour exécuter un procédé selon l'une des revendications précédentes 1 à 8.

11. Un système informatique (200) à utiliser dans un procédé selon l'une des revendications précédentes 1 à 8.

12. Un système comprenant un appareil (100) selon la revendication 10 et un système informatique (200) selon la revendication 11, dans lequel le système est configuré pour effectuer un procédé selon l'une des revendications précédentes 1 à 8.
